# FASCICULE DE BREVET EUROPEEN

(11) **EP 2 324 554 B1**
(45) Date de publication et mention de la délivrance du brevet: **18.01.2012**
(21) Numéro de dépôt: 09811120.6
(22) Date de dépôt: 02.09.2009
(51) Int. Cl.: H02K 1/18, H02K 5/08, H02K 15/12

(54) **CONSTRUCTION DE STATOR POUR MACHINE ÉLECTRIQUE**
STATORSTRUKTUR FÜR EINE ELEKTRISCHE MASCHINE
STATOR STRUCTURE FOR ELECTRIC MACHINE

(30) Priorité: 03.09.2008 FR 0855898
(43) Date de publication de la demande: 25.05.2011
(73) Titulaire: Société de Technologie MICHELIN, 63000 Clermont-Ferrand (FR); MICHELIN Recherche et Technique S.A., 1763 Granges-Paccot (CH)
(72) Inventeur: VEDY, Bertrand, CH-1814 La Tour de Peilz (CH); PROGIN, Frédéric, CH-1732 Arconciel (CH)
(74) Mandataire: Bauvir, Jacques
(86) Numéro de dépôt international: PCT/EP2009/061337
(87) Numéro de publication internationale: WO 2010/026158

(56) Documents cités:
- EP-A- 0 874 444
- EP-A- 1 367 698
- EP-A- 1 901 416
- DE-A1- 1 488 023
- DE-A1- 1 613 298
- JP-A- 58 224 546
- US-A- 5 142 182
- US-A1- 2008 005 888

## Description

### DOMAINE DE L'INVENTION

La présente invention est relative aux machines électriques tournantes. Elle vise notamment des machines capables de mettre en oeuvre des puissances importantes sous un format très compact, notamment lorsqu'elles fonctionnent en moteur, par exemple pour des applications de traction à bord des véhicules automobiles.

### ETAT DE LA TECHNIQUE

On sait que les propositions de véhicules électriques se sont multipliées ces dernières années. On a vu apparaître pour les propulser des moteurs électriques dont la puissance massique peut atteindre par exemple 20 voire 30 kW dans un encombrement compatible avec l'intérieur d'une roue de véhicule ou son environnement immédiat, dans le cas d'un véhicule comprenant une machine électrique par roue motrice. Compte tenu de la puissance importante mise en oeuvre par ces machines dans un espace restreint, des dispositions spéciales sont requises pour résister aux conditions parfois sévères imposées par leur fonctionnement. Il en va ainsi par exemple du besoin d'évacuer efficacement des calories produites dans des espaces confinés ou de la capacité de résister aux couples très importants qui s'appliquent entre le rotor et le stator de ces machines dont les pièces constitutives doivent être conçues et organisées en conséquence.

Selon un mode de construction connu dans l'état de la technique, par exemple par le document de brevet US 4 908 347, le stator est logé dans une carcasse (ou sleeve) de telle façon que les parties terminales de ce dernier s'étendent axialement vers l'extérieur au delà des extrémités du circuit magnétique statorique constituant la partie active du stator. Des enroulements sont logés dans les encoches. Au sortir des encoches à chaque extrémité axiale du bloc de pièces polaires, les conducteurs de ces enroulements sont repliés en formant des boucles pour passer d'une encoche à la suivante, constituant ainsi des chignons qui sont abrités dans les parties terminales respectives d'un fourreau de carcasse. Chaque partie terminale du fourreau est fermée par un couvercle qui complète la carcasse de la machine. Au centre de chaque couvercle est fixé un manchon qui supporte un palier dans lequel est engagée une extrémité respective de l'arbre de rotation du rotor de cette machine.

Lorsqu'un couple électromagnétique est créé dans l'entrefer entre le rotor et le stator, soit par l'envoi d'un courant électrique, si la machine fonctionne en moteur, soit en réaction à un couple mécanique appliqué à l'arbre du rotor, dans un fonctionnement en génératrice, les efforts correspondants sont transmis entre le stator et la carcasse, d'une part, et entre la carcasse et le bâti ou support de la machine électrique, d'autre part. Ces efforts doivent être compensés par des couples de réaction correspondants. La fiabilité de la fixation des différentes pièces fonctionnelles du stator entre elles, notamment du bloc de pièces magnétiques à la carcasse, pose parfois des problèmes au concepteur de machine de forte puissance dans un petit volume, eu égard à l'importance des efforts mis en jeu.

Le document EP 1 174 988 déposé par une société apparentée aux demandeurs décrit un autre exemple de réalisation d'une machine électrique tournante de forte puissance massique dans lequel le type de difficulté évoqué est susceptible de se poser. La machine comporte un stator, un rotor monté rotatif à l'intérieur du stator et une carcasse enfermant l'ensemble. Le stator comprend un circuit magnétique constitué par un bloc feuilleté de tôles magnétiques empilées entre une première et une deuxième faces terminales axiales. Il est traversé par un canal cylindrique dans lequel est monté le rotor avec un entrefer de séparation entre les surfaces latérales en regard desdits stator et rotor. Le stator est également parcouru par une série d'encoches courant d'une face terminale à l'autre, dans lesquelles sont logés des conducteurs repliés à la sortie de chaque face terminale en passant d'une encoche à la suivante pour former des bobines. Les portions repliées des conducteurs dans les faces terminale sont rassemblées dans des chignons noyés dans un bloc de résine d'isolation et de collage.

Dans ce document, le circuit magnétique est formé en deux parties. Il comprend tout d'abord un empilement, ou empilage, de tôles magnétiques statoriques dites en étoile définissant des dents radiales séparées par des ouvertures qui définissent les encoches du circuit magnétique. Ensuite, l'empilement des tôles en étoile est logé et fixé à l'intérieur d'une culasse cylindrique, formée par un deuxième empilement de pièces ou tôles magnétiques en forme de couronnes circulaire. La culasse assure la continuité magnétique entre les extrémités des dents des tôles en étoile du premier empilement en fermant les encoches du côté radial externe. Du côté radial opposé, les conducteurs au fond desdites encoches sont localisés à proximité immédiate de l'entrefer, comme exposé en détail dans le document évoqué. Enfin l'empilement des pièces de culasse est logé et bloqué en rotation à l'intérieur d'une carcasse dont les extrémités axiales comportent chacune un flasque supportant un palier de roulement du rotor, et sont fermées à chaque bout par un couvercle.

En fabrication, le stator est monté dans la carcasse et les tôles et les enroulements font l'objet d'une imprégnation de résine qui assure l'isolation électrique voire la sur isolation des pièces fonctionnelles vis à vis les unes des autres, notamment des tôles magnétiques et de tous les conducteurs. La résine d'imprégnation participe également à la cohésion des tôles magnétiques entre elles et à l'assemblage des deux empilages de tôles entre eux. Elle participe à la qualité de l'échange thermique avec le système de refroidissement. Elle assure le maintien des conducteurs dans leurs encoches et l'enrobage des chignons à la sortie des faces terminales de l'empilage des tôles dites étoiles, dans des blocs de résine.

Cependant, lors des essais de certaines machines puissantes, les demandeurs ont pu observer des cas d'endommagement de la structure du stator. A l'analyse il s'est avéré que certaines pièces normalement bloquées en rotation les unes par rapport aux autres se désolidarisaient sous l'effet de l'intensité des couples s'exerçant dans l'entrefer ainsi que sous l'effet de la température qui induit des dilatations différentielles entre les différents constituants du stator. Ainsi les difficultés déjà mentionnées peuvent-elles également se rencontrer dans le cas de structures du circuit magnétique statorique réalisées en deux parties en vue de permettre l'obtention d'un remplissage optimisé des conducteurs dans les encoches.

On pourrait penser améliorer la qualité de l'ancrage du stator, notamment dans le cas d'une construction du circuit magnétique en deux parties, en utilisant le bloc de résine qui enveloppe les chignons pour réaliser un pont d'accrochage mécanique entre la face d'extrémité de la partie terminale axiale du circuit magnétique, d'un côté au moins, et la paroi tubulaire interne du fourreau de ce même côté. Des solutions de ce type ont été décrites par exemple dans le document de brevet EP 1367698 où les chignons qui sont issus de chaque face du circuit magnétique sont enrobés d'un bloc de résine qui est en contact de conduction thermique et d'adhésion avec la paroi d'une partie tubulaire de la carcasse de chaque côté du circuit magnétique. Des rainures taillées dans cette paroi améliorent la mise en place de la résine lors de l'imprégnation et la conduction de chaleur.

Dans le document de brevet EP 0874444 un stator de machine électrique est inséré dans la carcasse. Des entailles placées en vis à vis dans les parois cylindriques de ces deux organes forment des logements allongés axialement qui sont remplis de résine pour créer à la fois un ancrage de ces deux organes contre les efforts de rotation et une bonne conduction de la chaleur. Des ouvertures d'admission permettent d'amener la résine depuis les extrémités axiales de l'ensemble jusque vers lesdits logements à l'interface entre les parois cylindriques en contact. Le système permet d'accroître l'adhésion entre les pièces du stator et la carcasse grâce à la formation de reliefs imbriqués qui tendent à améliorer le contact entre la résine d'imprégnation et les pièces à refroidir.
Le document DE 14 88 023 divulgue une construction comprenant des chignons enrobés de résine.

Le demandeur a constaté cependant que compte tenu des très fortes sollicitations, vibrations, contraintes et échauffements auxquels sont soumises les machines du type évoqué, il était important de maintenir l'isolation des conducteurs des bobines du stator à un niveau très élevé. C'est notamment le cas pour les conducteurs des chignons noyés dans les blocs de résine, ce peut aller à l'encontre d'un objectif d'imbrication très étroite du bloc de résine avec les parois de pièces de la machine. Il existe donc un besoin de trouver une solution de compromis à l'égard d'objectifs contradictoires.

### EXPOSE DE L'INVENTION

Ainsi, la présente invention vise une construction de machine électrique à enroulements statoriques qui permette de résoudre les difficultés évoquées avec des machines électriques très compactes et puissantes à la fois, pour des applications industrielles multiples, particulièrement dans le domaine de l'automobile.

A cet effet, l'invention a pour objet une construction de machine électrique comportant un stator, un rotor tournant autour d'un axe avec un entrefer entre le rotor et le stator et une carcasse enfermant l'ensemble, dans laquelle le stator comprend un circuit magnétique statorique possédant une première et une deuxième parties terminales limitées chacune par une face d'extrémité et traversé entre lesdites faces d'extrémité, d'une part, par un canal cylindrique pour loger le rotor et, d'autre part, par une série d'encoches dans lesquelles sont logés des conducteurs, repliés à la sortie de chaque face d'extrémité en passant d'une encoche à la suivante en formant un chignon de boucles. La carcasse comporte un fourreau terminé par une première et une deuxième extrémités tubulaires, à l'intérieur duquel est fixé le circuit magnétique entre lesdites extrémités pour former un ensemble propre à supporter les couples magnétiques engendrés en fonctionnement dans l'entrefer, et l'un au moins des chignons de boucles est enrobé en continuité avec les pièces du circuit magnétique dans un bloc de résine d'imprégnation qui s'étend radialement extérieurement jusqu'à la paroi de l'extrémité tubulaire correspondante.

Conformément à l'invention, cette construction comprend une pièce de renfort d'isolation électrique, mince et souple, interposée entre la paroi interne de la première extrémité tubulaire et une portion du bloc de résine correspondant, entourant la zone du chignon dans laquelle les conducteurs ont un tracé bouclé dans le bloc de résine, et un moyen de calage de cette pièce de renfort d'isolation, pour l'empêcher de venir déborder axialement intérieurement sur la paroi interne par rapport à cette zone, de façon à laisser un secteur annulaire déterminé de ladite paroi interne, compris entre ladite face d'extrémité et ladite zone, en contact d'adhésion directe avec le bloc de résine.

Selon un mode de réalisation ledit moyen de calage inclut un épaulement à la surface de la paroi interne de ladite pièce tubulaire, ayant une face annulaire tournée axialement vers l'extérieur, contre laquelle vient buter axialement intérieurement un bord de la pièce de renfort d'isolation mince et souple. Conformément à une disposition complémentaire, un deuxième épaulement en sens inverse est taillé dans la ladite paroi interne pour y créer une gorge superficielle dans laquelle est retenue ladite bande de matériau.

Grâce au moyen de calage qui vient d'être mentionné, on dispose d'un aménagement qui permet de combiner avec précision une faculté d'isolation renforcée des certaines parties électriques sensibles de la machine électrique avec une amélioration de l'accrochage entre le stator et la carcasse que procure l'utilisation d'un bloc de résine formé autour d'au moins un des chignons, pour établir une liaison mécanique entre une face d'extrémité du bloc magnétique du stator et la paroi interne de la carcasse. En pratique, la gorge de faible épaisseur ménagée vers l'extrémité axiale du fourreau de carcasse permet d'assurer un positionnement d'une bande d'isolant, tel que du Kapton®, avec précision dans une position axiale autour du chignon qui correspond à une zone dans laquelle la dimension radiale des boucles est la plus grande, c'est à dire où elles s'approchent le plus de la paroi métallique interne de la carcasse. Ceci correspond à la zone dans laquelle un renforcement de l'isolation électrique est la plus utile. Le calage permet donc d'empêcher, avec une bonne reproductibilité de fabrication, que la bande d'isolant ne puisse venir déborder dans le secteur annulaire située entre ladite zone et la face d'extrémité du circuit magnétique dont est issu le chignon de boucles.

Lors du montage de la machine, après imprégnation, ce secteur annulaire est en contact d'adhésion direct avec le bloc de résine qui entoure le chignon. On cherche à faire en sorte que la dimension axiale de ce secteur annulaire soit suffisamment grande pour que l'accrochage complémentaire de ladite face d'extrémité du circuit magnétique procuré par le bloc de résine soit aussi efficace que possible contre les couples de rotation d'origine magnétique mis en jeu par le fonctionnement de la machine.

On comprend que le moyen d'accrochage supplémentaire est réalisé, au moins en partie, par la liaison de la face d'extrémité du circuit magnétique avec le bloc de résine formé autour du chignon complétée par la liaison de ce bloc de résine avec au moins un secteur de la paroi interne de la première extrémité tubulaire du fourreau convenablement aménagé à cet effet. Avec la résine, ces liaisons sont avantageusement réalisées par collage.

Conformément à un mode de réalisation préféré complémentaire en vue du renforcement de l'accrochage du stator, on utilise un montage dans lequel la face d'extrémité du circuit magnétique considérée est bloquée axialement vers l'extérieur par un épaulement dans la paroi interne de ladite extrémité tubulaire de la carcasse. Le secteur annulaire de contact avec adhésion du bloc de résine s'étend alors axialement vers l'intérieur au moins jusqu'audit épaulement mais inclut également, de préférence, la face perpendiculaire en butée contre le circuit magnétique. Le changement d'angle d'orientation des faces en contact améliore encore l'adhésion entre les deux pièces.

Toujours pour augmenter encore la cohésion mutuelle des parties en contact contre des couples d'arrachage qui peuvent être élevés, il peut être opportun de faire en sorte que les parties en contact dudit bloc de résine et de la paroi interne de la carcasse possèdent des reliefs mutuellement imbriqués les uns dans les autres et orientés au moins partiellement dans un sens axial pour renforcer leur ancrage mutuel en rotation. Dans ce dernier cas, on peut prévoir d'entailler la zone ou secteur de collage par des creux remplis par le bloc de résine pour renforcer le collage par rapport au fourreau de carcasse par imbrication mutuelle de reliefs entre ces deux éléments.

A cet égard, lorsque la face d'extrémité de la première partie terminale du circuit magnétique est bloquée axialement vers l'extérieur par un épaulement dans la paroi interne de ladite extrémité tubulaire, on prévoit selon un mode d'exécution de créer des reliefs ou des entailles en série tout au long de la circonférence de l'arête dudit épaulement.

Une application privilégiée de l'invention est fournie par le cas d'une construction de machine électrique dans laquelle le circuit magnétique statorique comprend un premier empilage, ou empilement, de tôles magnétiques, dites étoile, en étoile ou étoilées, définissant des dents radiales séparées par des ouvertures qui forment les encoches dudit circuit magnétique et un deuxième empilage de pièces annulaires en forme de couronnes circulaires qui définissent une culasse cylindrique à l'intérieur de laquelle est monté en condition de continuité magnétique l'empilage de pièces étoilées. Dans ce cas, le moyen d'accrochage selon l'invention établit une liaison directe entre l'empilage de tôles étoilées et la paroi interne de ladite première extrémité tubulaire de la carcasse. Elle contribue à un renforcement supplémentaire du blocage en rotation de l'empilage de tôles étoilées contre les couples de rotation élevés qui sont transmis à partir de l'entrefer vers la carcasse de la machine.

D'autres caractéristiques et avantages de l'invention ressortent de la description faite ci-après en référence aux dessins annexés qui montrent, à titre d'exemple non limitatifs, une réalisation de l'objet de l'invention.

### BREVE DESCRIPTIONDES FIGURES

La figure 1 est une vue en coupe, par la plan axial I-I de la figure 2, d'un exemple de stator de machine électrique et d'un élément ou fourreau de la carcasse dans lequel est logé ce stator, où est mise en oeuvre de l'invention.

La figure 2 est une vue en coupe du sous-ensemble de la figure 1 par le plan figuré par la trace II-II de la figure 1.

La figure 3 est une vue en coupe du fourreau de la figure 1, seul, pour illustrer un détail de la réalisation.

La figure 4 est une vue agrandie simplifiée de la portion de stator dans le fourreau du mode de réalisation des figures 1 et 2.

### DESCRIPTION D'UN EXEMPLE DE REALISATION

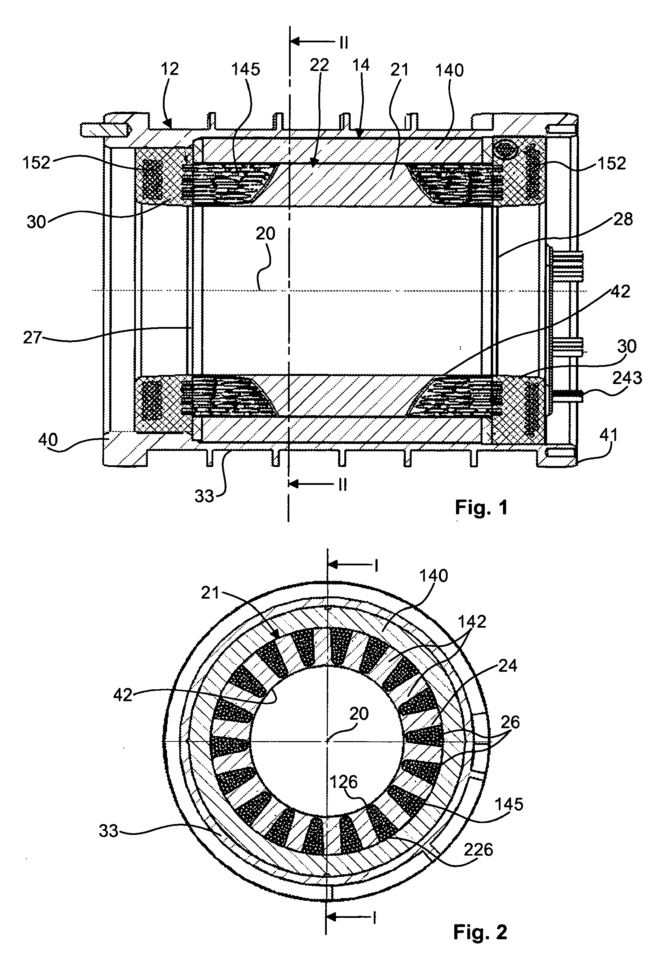

Une machine électrique synchrone 10 représentée, sans son rotor, à la figure 1 comprend une carcasse externe 12 à l'intérieur duquel est logé un stator 14, limité intérieurement par une paroi cylindrique 42. Cette paroi définit classiquement une face d'un entrefer fonctionnel dont l'autre face cylindrique est constituée par la paroi latérale du rotor monté rotatif autour d'un axe 20 à l'intérieur du stator. Le stator 14 comprend un circuit magnétique statorique 22 qui comprend, d'une part, un empilage ou empilement 21 de tôles magnétiques étoilées 24, empilées dans la direction axiale, et, d'autre part, une culasse cylindrique 140 (fig. 2) constituée par un empilement cylindrique de tôles en forme de couronnes circulaires. Les tôles 24 en forme d'étoile ont des dents 142 séparées par des entailles trapézoïdales de manière à réaliser dans l'empilement 21 une série d'encoches 26 qui, sans être parallèles à l'axe 20, courent dans l'empilement 21, entre une de ses faces d'extrémité axiale 27 et son autre face d'extrémité axiale 28, en restant circonscrites à l'intérieur d'une couronne cylindrique virtuelle dont le bord interne est au voisinage immédiat de la paroi cylindrique interne 42 de l'empilement 21.

Dans la vue en coupe de la figure 2, on aperçoit clairement les encoches 26 parcourues par des conducteurs 145, qui s'évasent entre une extrémité radiale interne 126 au voisinage de l'entrefer et leur autre extrémité radialement externe 226 où elles sont fermées par la culasse 140 qui ferme le circuit magnétique statorique 22 à l'extrémité radiale externe de chacune des dents 142 des tôles étoilées 24. Dans les encoches 26 sont logés des conducteurs en cuivre 145, repliés au sortir de chaque encoche 26 dans les faces 27 et 28 de part et d'autre de l'empilement 21 en formant une boucle afin de pénétrer dans une autre encoche 26. De cette façon les conducteurs 145 réalisent trois enroulements ou groupes d'enroulements, qui peuvent être connectés électriquement à une source de tension ou un dispositif d'utilisation ou de stockage d'énergie électrique. Les ensembles de boucles des conducteurs d'enroulement 145 sortant des faces terminales 27 et 28 sont rassemblés à chaque extrémité en deux "chignons" respectifs 152 tout autour de l'extrémité de l'empilement 21. Ces chignons sont imprégnés d'une résine qui à la fabrication pénètre dans les encoches à partir d'une des faces terminales au moins et après solidification forme deux blocs terminaux 30 à la sortie des deux faces 27 et 28 (figure 1).

Le stator 14 est logé dans un fourreau de carcasse comprenant notamment un manchon 33 (figures 1 et 2). Dans l'espace cylindrique interne délimité par la paroi du manchon 33 est bloquée en rotation la culasse 140 du circuit magnétique statorique 22. La face radiale externe de la paroi du manchon 33 est garnie de nervures en hélice 36 qui ensemble délimitent des canaux de circulation de fluide de refroidissement du corps de stator. A chaque extrémité axiale, le manchon 33 du fourreau présente une face d'extrémité annulaire, respectivement 40 du côté de la sortie cannelée de l'arbre du rotor, ici à gauche, et 41, du côté où l'on aperçoit la sortie des conducteurs de raccordement électrique 243 des bobines d'induction à l'extérieur de la machine. Chaque face annulaire 40 et 41 comporte des taraudages dans la périphérie pour venir visser dans chacune d'elle un flasque d'extrémité, non représenté. Chacun de ces flasques supporte dans sa partie centrale un palier de roulement centré sur l'axe 20 pour recevoir l'extrémité respective d'un arbre sur lequel est monté le rotor de la machine. On notera que ces derniers détails, qui sont destinés à rappeler l'organisation générale de ce type de machine électrique, ne sont pas nécessaires à la compréhension de la construction qui fait l'objet du présent mémoire descriptif et n'ont pas été représentés au dessin.

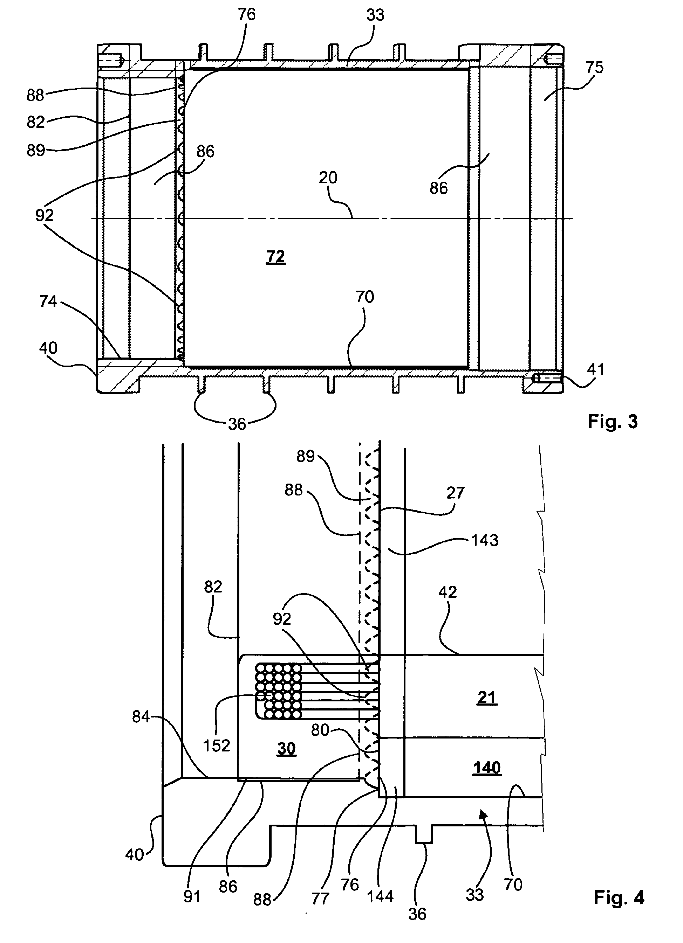

Revenant à cette dernière, le manchon 33 comporte (figure 3) une paroi interne cylindrique (70) dont la portion centrale principale reçoit la face latérale externe de l'empilement de culasse 140 entre deux extrémités tubulaires respectivement 74, qui correspond à la face annulaire axiale 40, et 75, du côté de la face d'extrémité axiale 41. Le diamètre interne de l'extrémité tubulaire 74 est un peu inférieur à celui de la paroi centrale 72 en sorte que ces deux sections de paroi sont séparées par un épaulement 76 orienté vers l'extrémité prévue pour la sortie des fils 243 du stator 14. Du côté opposé à cette sortie de fils, l'empilement des anneaux ou tôles de culasse 140 est terminé par une tôle de butée annulaire 144. Cette tôle vient en butée contre l'épaulement 76 en débordant radialement du côté interne, sachant que l'écart entre les diamètres 72 et 74 est inférieur à l'épaisseur de l'empilement de culasse cylindrique 140.

Sur la figure 4 on voit que l'empilement 21 de tôles étoiles 24 est arrêté par une tôle d'extrémité 143 dont la face axialement externe est située dans la face terminale 27 au même niveau axial que la face correspondante 80 de la tôle de butée 144 qui termine l'empilage culasse 140. Les conducteurs 145 débouchent des sorties d'encoches 36 dans la face 27 et sont rassemblés dans le chignon 152 à l'intérieur de l'extrémité tubulaire 74 du manchon 33. Ils sont noyés dans le bloc de résine 30 qui occupe sensiblement tout l'espace annulaire cylindrique interne à cette extrémité tubulaire 74 et qui, par l'imprégnation des conducteurs et des tôles dans les encoches 26 par la résine à partir de chacune des faces terminales 27 et 28 est solidarisé avec l'empilement 21.

Du côté axial externe de l'extrémité tubulaire 74, le bloc de résine 30 s'étend jusqu'à la limite 82 d'une portée cylindrique interne 84, formée dans la paroi interne du manchon 33 à la sortie de sa face terminale 40. Cette portée est destinée à recevoir, au montage, un manchon de centrage d'un des flasques d'extrémité mentionnés précédemment, qui est normalement fixé par des vis contre la face axiale 40 du manchon 33. Comme il a été mentionné précédemment, ce flasque, non représenté, porte l'un des paliers de roulement d'une extrémité correspondante de l'arbre de rotation du rotor. La limite 82 correspond également au bord externe d'une gorge 86 à fond cylindrique plat, de faible profondeur, dans la paroi 74. L'autre bord 88 de la gorge 86 du côté axial interne est espacé de l'arête 77 de l'épaulement 76 d'une distance correspondant à une fraction de la longueur axiale du bloc de résine 30.

Dans la gorge 86 est logée une feuille d'isolant électrique 91, spécialisé pour ce type d'application dans les machines électriques, tel qu'un film de Kapton® (marque déposée de la Société Du Pont de Nemours). L'épaisseur de la feuille 91 correspond sensiblement à la profondeur de la gorge 86. La feuille 91 tapisse ainsi le pourtour interne du manchon 33 sur une partie de la longueur de son contact avec le bloc de résine 30 qui correspond à l'entourage des boucles de conducteurs qui effectuent un aller et retour par rapport à la face d'extrémité 27 du circuit magnétique entre la sortie d'une encoche et l'entrée dans une autre encoche. Toutefois, la feuille de Kapton® 91 ne s'étend pas jusqu'à la face 27. Elle est calée contre l'épaulement 88 qui forme le bord de la gorge 86 et l'empêche de déborder dans le secteur 89 qui s'étend axialement entre l'arête 77 de l'épaulement 76 et la bordure 88 de la gorge 86. Ainsi, en dehors du secteur 89, la feuille de Kapton® 91 ajoute encore un niveau d'isolation entre les conducteurs 145 des enroulements dans le chignon 152 et la paroi métallique interne du corps du manchon 33 dans la zone où les boucles de conducteurs se développent le plus radialement en s'approchant davantage radialement de la paroi interne conductrice du fourreau ou manchon 74 (comme on le voit mieux dans la figure 1 que dans la représentation très schématique de la figure 4). Cependant, la résine n'adhérant pas au Kapton®, ni le Kapton® au métal (ici de l'aluminium) constitutif du corps du manchon 33, conformément à l'invention, on ménage un secteur 89 qui reste libre pour un contact d'adhésion directe entre le bloc de résine et la paroi interne 74, afin de renforcer la liaison entre le circuit magnétique 22 et la paroi interne du manchon 33, et plus particulièrement de l'empilement 21 avec l'extrémité tubulaire de ce manchon 33.

Comme clairement représenté dans la figure 3, pour renforcer encore cette liaison, l'arête 77 de l'épaulement 76 présente des entailles 92 sur toute sa périphérie dont les sommets arrondis se terminent dans le secteur cylindrique 89 de la paroi 74. Lors de la fabrication de la machine, l'empilement de tôles culasses 140 est introduit à l'intérieur du manchon 33, dans le sens allant de la face terminale 28 vers la face terminale 27, jusqu'à ce que la face 80 de tôle de butée de culasse 144 arrive en butée contre l'épaulement 76. Ensuite, l'empilage de tôles étoiles 21 dont les encoches sont remplies de conducteurs est introduit dans l'empilage de tôles culasses. Une opération d'imprégnation est alors entreprise dans laquelle la résine d'isolation et de collage liquide est introduite dans l'assemblage dans l'extrémité tubulaire 84 du manchon 33 en position dressée verticalement. La quantité de résine est réglée de telle manière qu'après le retrait dû à son refroidissement, la résine s'introduise dans tous les interstices laissés libres et se solidifie en formant le bloc de résine 30.

En particulier, la résine réalise, en tout ou partie, la solidarisation de toutes les tôles des empilages 21 et 140, l'assemblage entre eux par collage des empilages de tôles magnétiques étoiles 21 et culasse 140, ainsi que le collage entre la périphérie de l'empilement de culasse 140 et la surface interne 70 du manchon 33. La résine constitutive du bloc de résine 30 est en contact avec les faces d'extrémité des tôles de butée 143 et 144 des deux empilages jusqu'à la paroi cylindrique 42 qui définit le canal dans lequel viendra se loger le rotor. Le bloc de résine 30 emplit également l'espace annulaire délimité extérieurement par le secteur 89 de la paroi du manchon. La résine solidifiée adhère à la surface en aluminium du secteur 89 qui, on le rappelle, est dégagée de tout isolant et notamment n'est pas recouvert par la feuille de Kapton® 91. La résine du bloc 30 remplit également tous les creux formés par les entailles 92 dans l'épaulement 76. Elle s'infiltre, le cas échéant, dans les interstices entre les faces en contact entre la tôle de butée culasse 144 d'une part, et la face de contre-butée de l'épaulement 76 ainsi que la surface interne 70 du manchon, d'autre part. Le bloc de résine 30 réalise donc, en plus d'un collage direct avec différentes surfaces, un accrochage par imbrication de reliefs pour ancrer l'empilage de tôles étoilées 21 dans le manchon 33. Ainsi se trouve renforcée la résistance aux couples de rotation qui s'exercent en fonctionnement entre le circuit magnétique 22 et le manchon de carcasse 33.

La solution ici décrite permet bien entendu d'obtenir un tel renforcement dans le cas où le stator comporte un circuit magnétique statorique unique solidarisé par exemple par collage avec la carcasse. Son application est opportune dans le cas cité ici à titre d'exemple, où le circuit magnétique statorique est constitué en deux parties assemblées par collage, ce qui représente une interface de plus qui doit supporter les couples de rotation qui naissent dans l'entrefer. Ce renforcement est particulièrement bienvenu si on se rappelle que la séparation entre un premier empilage de tôles étoiles et un deuxième empilage de tôles de culasse qui ferme l'ouverture évasée des encoches dans lesquelles sont empilés des conducteurs d'enroulement est efficace pour effectuer un remplissage optimal des encoches par ces conducteurs. Cette disposition permet donc d'obtenir une puissance massique importante qui à son tour requiert un accrochage particulièrement performant des pièces statoriques entre elles.

Bien entendu la solution présentée peut être appliquée à chaque extrémité du fourreau de carcasse, le cas échéant.

Dans un exemple de réalisation tel que décrit ci-dessus, on a construit un stator de machine synchrone à branchement triphasé en étoile dont le diamètre global externe était d'environ 110 millimètres, pour un diamètre d'entrefer de 50 millimètres. La longueur des empilements magnétiques à l'intérieur du manchon est de 80 millimètres environ. Les blocs de résine 30 ont une longueur axiale d'environ 20 millimètres et la longueur du secteur de paroi interne du manchon dépourvue d'isolation Kapton® est d'environ 2,5 millimètres avec des indentations dans l'arête de l'épaulement 76. On a ainsi obtenu une machine de 30 kilowatts, capable de mettre en oeuvre des couples de 35 Nm sans qu'aucune défaillance ait été constatée au cours des essais.

L'invention n'est pas limitée à l'exemple décrit et représenté ci-dessus; diverses modifications peuvent y être apportées sans sortir de son cadre défini par les revendications annexées.

## Revendications

1. Construction de machine électrique comportant un stator, un rotor (16) tournant autour d'un axe (20) avec un entrefer entre le rotor et le stator et une carcasse (33, 34) enfermant l'ensemble, dans laquelle
le stator (14) comprend un circuit magnétique statorique (22) possédant une première et une deuxième parties terminales limitées chacune par une face d'extrémité (27 et 28) et traversé entre lesdites faces d'extrémité, d'une part, par un canal cylindrique (42) pour loger le rotor (12) et, d'autre part, par une série d'encoches (26) dans lesquelles sont logés des conducteurs, repliés à la sortie de chaque face d'extrémité en passant d'une encoche à la suivante en formant un chignon de boucles,
la carcasse comporte un fourreau (33) terminé par une première et une deuxième extrémités tubulaires (74,75), à l'intérieur duquel est fixé le circuit magnétique (22) entre lesdites extrémités (74,75) pour former un ensemble propre à supporter les couples magnétiques engendrés en fonctionnement dans l'entrefer, et
l'un au moins des chignons (152) de boucles est enrobé en continuité avec les pièces du circuit magnétique dans un bloc de résine d'imprégnation (30) qui s'étend radialement extérieurement jusqu'à la paroi de l'extrémité tubulaire (74,75) correspondante.
**caractérisé en ce que** cette construction comprend une pièce de renfort d'isolation électrique (91), mince et souple, interposée entre la paroi interne de la première extrémité tubulaire (74,75) et une portion du bloc de résine (30) correspondant issu de la face d'extrémité de la première partie terminale du circuit magnétique statorique (22) entourant la zone du chignon dans laquelle les conducteurs ont un tracé bouclé dans le bloc de résine, et un moyen de calage (88) de cette pièce de renfort d'isolation (91), pour l'empêcher de venir déborder axialement intérieurement sur la paroi interne de l'extrémité tubulaire (74,75) par rapport à cette zone, de façon à laisser un secteur annulaire déterminé (89) de la dite paroi interne de l'extrémité tubulaire (74,75) en contact d'adhésion directe avec le bloc de résine.

2. Construction de machine électrique selon la revendication 1, **caractérisée en ce que** ledit moyen de calage inclut un épaulement (88) à la surface de la paroi interne de ladite pièce tubulaire ayant une face annulaire tournée axialement vers l'extérieur contre laquelle vient buter axialement intérieurement un bord de la pièce de renfort d'isolation souple (91).

3. Construction de machine électrique selon la revendication 2, **caractérisée en ce que** ladite bande de matériau (91) est montée dans une gorge de faible épaisseur (86) ménagée dans la paroi de la pièce tubulaire d'extrémité de la carcasse entre ledit épaulement de calage et un deuxième épaulement (82) en sens inverse.

4. Construction de machine électrique selon l'une des revendications 1 à 3, **caractérisé en ce que** la face d'extrémité (27) de la première partie terminale du circuit magnétique est bloquée axialement vers l'extérieur par un épaulement (76) dans la paroi interne de ladite extrémité tubulaire (74) et que le secteur (89) de collage du bloc de résine (30) s'étend axialement vers l'intérieur au moins jusqu'audit épaulement et à sa face de butée contre le circuit magnétique.

5. Construction de machine électrique selon l'une des revendications 1 à 4, **caractérisée en ce que** les parties en contact dudit bloc de résine (30) et dudit secteur (89) de paroi de l'extrémité tubulaire (74) possèdent des reliefs (92) mutuellement imbriqués les uns dans les autres et orientés au moins partiellement dans un sens axial pour renforcer leur ancrage mutuel en rotation.

6. Construction de machine électrique selon l'une des revendications 1 à 3, **caractérisée en ce que** la face d'extrémité (27) de la première partie terminale du circuit magnétique est bloquée axialement vers l'extérieur par un épaulement (76) dans la paroi interne de ladite extrémité tubulaire (74) dont l'arête est pourvue de reliefs ou d'entailles en série le long de sa circonférence imbriqués avec des entailles ou reliefs correspondants dans le bloc de résine.

7. Construction de machine électrique selon l'une des revendications 1 à 3, dans laquelle le circuit magnétique comprend un premier empilage (21) de tôles magnétiques, dites étoiles, comportant des branches ou dents radiales séparées par des ouvertures qui forment les encoches (26) dudit circuit magnétique et un deuxième empilage (140) de pièces en forme de couronne circulaire formant une culasse cylindrique à l'intérieur de laquelle est monté, en condition de continuité magnétique, et bloqué en rotation le premier empilage, **caractérisée en ce que** le bloc de résine (30) établit une liaison de renfort mécanique entre au moins la première face d'extrémité de la partie terminale du premier empilage (21) du circuit magnétique (27) et la section annulaire (89) dans la paroi interne de ladite extrémité tubulaire (74).

## Claims

1. Electric machine structure comprising a stator, a rotor (16) that rotates about an axis (20) with an air gap between the rotor and the stator and a casing (33, 34) enclosing the whole, in which structure
the stator (14) comprises a stator magnetic circuit (22) having a first and a second terminal part each bounded by an end face (27 and 28) and crossed, between the said end faces, firstly by a cylindrical passage (42) to house the rotor (12) and, second, by a series of slots (26) which house conductors, bent over as they leave each end face to pass from one slot to the next thereby forming a winding head,
the casing comprises a sleeve (33) ending in a first and a second tubular end (74, 75), inside which sleeve the magnetic circuit (22) is fixed between the said ends (74, 75) to form an entity able to withstand the magnetic torques generated in the air gap during operation, and
at least one of the winding heads (152) of loops is coated, in continuity with the pieces of the magnetic circuit, in a block of potting resin (30) which extends radially on the outside as far as the corresponding tubular end (74, 75) wall,
**characterized in that** this structure comprises a thin and flexible electrical insulating reinforcing piece (91) which is interposed between the internal wall of the first tubular end (74, 75) and a portion of the corresponding block of resin (30) originating out of the end face of the first terminal part of the stator magnetic circuit (22) surrounding that region of the winding head in which the conductors follow a looped path in the block of resin, and a wedging means (88) that wedges this insulating reinforcing piece (91) in position to prevent it from protruding axially internally on the internal wall of the tubular end (74, 75) with respect to this region so as to leave a determined annular sector (89) of the said internal wall of the tubular end (74, 75) in direct adhering contact with the block of resin.

2. Electric machine structure according to Claim 1, **characterized in that** the said wedging means includes a shoulder (88) at the surface of the internal wall of the said tubular piece that has an annular face facing axially toward the outside and against which an edge of the flexible insulating reinforcing piece (91) butts axially internally.

3. Electric machine structure according to Claim 2, **characterized in that** said strip of material (91) is mounted in a narrow groove (86) formed in the wall of the tubular end piece of the casing between said wedging shoulder and a second shoulder (82) facing in the opposite direction.

4. Electric machine structure according to one of Claims 1 to 3, **characterized in that** the end face (27) of the first terminal part of the magnetic circuit is blocked axially toward the outside by a shoulder (76) in the internal wall of the said tubular end (74) and that the sector (89) for the bonding of the block of resin (30) extends axially toward the inside at least as far as the said shoulder and as its face for abutment against the magnetic circuit.

5. Electric machine structure according to one of Claims 1 to 4, **characterized in that** the contacting parts of the said block of resin (30) and of the said sector (89) of the tubular end wall (74) have reliefs (92) imbricated in one another and at least partially directed in an axial direction in order to strengthen their anchorage to one another in terms of rotation.

6. Electric machine structure according to one of Claims 1 to 3, **characterized in that** the end face (27) of the first terminal part of the magnetic circuit is blocked axially towards the outside by a shoulder (76) in the internal wall of the said tubular end (74), the edge corner of which is provided with reliefs or slits in a series along its circumference and which are imbricated with corresponding slits or reliefs in the block of resin.

7. Electric machine structure according to one of Claims 1 to 3, in which the magnetic circuit comprises a first stack (21) of laminations, known as star laminations, comprising radial arms or teeth separated by openings which form the slots (26) of the said magnetic circuit and a second stack (140) of pieces in the shape of a circular ring forming a cylindrical casing inside which, under conditions of magnetic continuity, and blocked in terms of rotation, the first stack is mounted, **characterized in that** the block of resin (30) establishes a mechanical reinforcing connection between at least the first end face of the terminal part of the first stack (21) of the magnetic circuit (27) and the annular section (89) in the internal wall of the said tubular end (74).

## Patentansprüche

1. Konstruktion einer elektrischen Maschine, die einen Stator, einen Rotor (16), der sich um eine Achse (20) dreht, wobei zwischen dem Rotor und dem Stator ein Luftspalt vorhanden ist, und ein die Gesamtheit umschließendes Polgehäuse (33, 34) umfasst, wobei
der Stator (14) einen Stator-Magnetkreis (22) umfasst, der einen ersten und einen zweiten Endabschnitt besitzt, die jeweils durch eine Stirnfläche (27 und 28) begrenzt sind, und durch den zwischen den Stirnflächen einerseits ein zylindrischer Kanal (42) für die Aufnahme des Rotors (12) und andererseits eine Reihe von Nuten (26), in denen Leiter untergebracht sind, die am Ausgang jeder Stirnfläche umgebogen sind und von einer Nut in die Folgende verlaufen, um dabei Schleifen-Schaltenden zu bilden, verlaufen,
das Polgehäuse eine Hülse (33) aufweist, die in einem ersten und einem zweiten rohrförmigen Ende (74, 75) endet, in der der Magnetkreis (22) wischen den Enden (74, 75) befestigt ist, um eine Anordnung zu bilden, die die magnetischen Momente aufnehmen kann, die im Betrieb im Luftspalt erzeugt werden, und
wenigstens eines der Schleifen-Schaltenden (152) in Verbindung mit den Magnetkreisteilen von einem Imprägnierungsharzblock (30) umhüllt ist, der sich radial außerhalb bis zu der Wand des entsprechenden rohrförmigen Endes (74, 75) erstreckt,
**dadurch gekennzeichnet, dass** diese Konstruktion ein elektrisch isolierendes Verstärkungsteil (91) umfasst, das dünn und nachgiebig ist und zwischen die Innenwand des ersten rohrförmigen Endes (74, 75) und einen Abschnitt des entsprechenden Harzblocks (30), der von der Stirnfläche des ersten Endteils des Stator-Magnetkreises (22) ausgeht, eingefügt ist und die Schaltendezone umgibt, in der die Leiter in dem Harzblock eine Schleifenbahn aufweisen, und ein Keilmittel (88) für dieses Isolationsverstärkungsteil (91) umfasst, um zu verhindern, dass dieses Teil axial einwärts über die Innenwand des rohrförmigen Endes (74, 75) in Bezug auf diese Zone vorsteht, derart, dass ein bestimmter ringförmiger Abschnitt (89) dieser Innenwand des rohrförmigen Endes (74, 75) in einem direkten Haftkontakt mit dem Harzblock gelassen wird.

2. Konstruktion einer elektrischen Maschine nach Anspruch 1, **dadurch gekennzeichnet, dass** das Keilmittel eine Schulter (88) an der Oberfläche der Innenwand des rohrförmigen Teils aufweist, die eine ringförmige Fläche besitzt, die axial auswärts gewendet ist und an der axial innen ein Rand des nachgiebigen Isolationsverstärkungsteils (91) anliegt.

3. Konstruktion einer elektrischen Maschine nach Anspruch 2, **dadurch gekennzeichnet, dass** das Materialband (91) in einer Kehle (86) mit geringer Dicke montiert ist, die in der Wand des rohrförmigen Endteils des Polgehäuses zwischen der Keilschulter und einer zweiten Schulter (82) mit umgekehrter Richtung ausgebildet ist.

4. Konstruktion einer elektrischen Maschine nach einem der Ansprüche 1 bis 3, **dadurch gekennzeichnet, dass** die Stirnfläche (27) des ersten Endteils des Magnetkreises axial nach außen durch eine Schulter (76) in der Innenwand des rohrförmigen Endes (74) blockiert ist und dass sich der Klebeabschnitt (89) des Harzblocks (30) axial nach innen wenigstens bis zu dieser Schulter und zu ihrer Anschlagfläche an dem Magnetkreis erstreckt.

5. Konstruktion einer elektrischen Maschine nach einem der Ansprüche 1 bis 4, **dadurch gekennzeichnet, dass** die Teile, die mit dem Harzblock (30) und mit dem Wandabschnitt (89) des rohrförmigen Endes (74) in Kontakt sind, Reliefs (92) besitzen, die gegenseitig ineinander verzahnt sind und weinigstens teilweise in einer axialen Richtung orientiert sind, um ihre gegenseitige rotatorische Verankerung zu verstärken.

6. Konstruktion einer elektrischen Maschine nach einem der Ansprüche 1 bis 3, **dadurch gekennzeichnet, dass** die Stirnfläche (27) des ersten Endteils des Magnetkreises axial nach außen durch eine Schulter (76) in der Innenwand des rohrförmigen Endes (74) blockiert ist, deren Kante in einer Reihe längs ihres Umfangs mit Reliefs oder Einschnitten versehen ist, die mit entsprechenden Einschnitten bzw. Reliefs in dem Harzblock verzahnt sind.

7. Konstruktion einer elektrischen Maschine nach einem der Ansprüche 1 bis 3, wobei der Magnetkreis einen ersten Stapel (21) aus Magnetblechen, so genannten Sternen, umfasst, der radiale Schenkel oder Zähne aufweist, die durch Öffnungen getrennt sind, die die Nuten (26) des Magnetkreises bilden, und einen zweiten Stapel (140) von Teilen umfasst, die die Form eines kreisförmigen Kranzes haben und ein zylindrisches Joch bilden, in dem im Zustand mit magnetischer Leitung der erste Stapel drehfest montiert ist, **dadurch gekennzeichnet, dass** der Harzblock (30) eine Verbindung zur mechanischen Verstärkung weinigstens wischen der ersten Stirnfläche des Endteils des ersten Stapels (21) des Magnetkreises (27) und dem ringförmigen Abschnitt (89) in der Innenwand des rohrförmigen Endes (74) bildet.
